(19) Europäisches Patentamt
European Patent Office
Office européen des brevets

(11) EP 4 803 641 A1

(12) # EUROPEAN PATENT APPLICATION
published in accordance with Art. 153(4) EPC

(43) Date of publication:
**09.09.2026 Bulletin 2026/37**

(21) Application number: **25768073.6**

(22) Date of filing: **03.02.2025**

(51) International Patent Classification (IPC):
***C21B 5/00*** *(2006.01)* ***C21B 7/16*** *(2006.01)*

(52) Cooperative Patent Classification (CPC):
**F27D 17/20; C21B 5/00; C21B 5/001; C21B 5/006; C21B 5/06; C21B 7/002;** C21B 7/16; C21B 2005/005; C21B 2100/22; C21B 2100/26; C21B 2100/282; C21B 2100/44; C21B 2100/62

(86) International application number:
**PCT/JP2025/003468**

(87) International publication number:
**WO 2025/187290 (11.09.2025 Gazette 2025/37)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.03.2024 JP 2024034350**

(71) Applicant: **JFE Steel Corporation**
**Tokyo 100-0011 (JP)**

(72) Inventors:
- **KUWABARA, Minoru**
  **Tokyo 100-0011 (JP)**
- **KANEYAMA, Shinnosuke**
  **Tokyo 100-0011 (JP)**
- **MATSUTANI, Kohei**
  **Tokyo 100-0011 (JP)**
- **GOTO, Shuhei**
  **Tokyo 100-0011 (JP)**
- **YANAGISAWA, Ryuta**
  **Tokyo 100-0011 (JP)**

(74) Representative: **Scott, Stephen John**
**YUJA IP LAW**
**East Coast House**
**25 Skeldergate**
**York YO1 6DH (GB)**

(54) **BLAST FURNACE OPERATION METHOD AND BLAST FURNACE AUXILIARY FACILITY**

(57) Provided is a method of operating a blast furnace that enables a further decrease in carbon dioxide emissions from the blast furnace under stable operation. As a blown-in reducing agent, a first reducing gas containing carbon monoxide and a second reducing gas containing at least one of a hydrocarbon or hydrogen is used, and the first reducing gas is heated before being blown into the blast furnace.

*FIG. 1*

Supply within steelworks
Blast furnace gas
8
First regenerated reducing gas
By-product remaining gas
Preheated gas blowing
Waste heat
Hydrogen gas
Water vapor
5
3
Second regenerated reducing gas
6
Water vapor
7
1
9-2
Surplus
Supply within steelworks
2
Second external reducing gas
Blast gas
4
9-3
9-1
First external reducing gas
Hot metal
Other blown-in reducing agent

EP 4 803 641 A1

## Description

TECHNICAL FIELD

The present disclosure relates to methods of operating blast furnaces and blast furnace ancillary apparatus.

BACKGROUND

In recent years, there has been a strong demand to reduce carbon dioxide ($CO_2$) emissions against a backdrop of global environmental issues. Therefore, even in the operation of blast furnaces in steelworks, there is a demand for low reducing agent rate (low RAR) operation.

In a typical blast furnace, hot blast (air heated to about 1200 °C) is blown into the blast furnace as blast gas from tuyeres. This causes the oxygen in the hot blast to react with coke or pulverized coal that serves as the reducing agent, generating carbon monoxide (CO) and hydrogen ($H_2$). This carbon monoxide and hydrogen reduces iron ore charged into the blast furnace. Further, carbon dioxide is generated in this iron ore reduction reaction. The blast gas is gas that is blown into the blast furnace through the tuyeres. The blast gas also plays a role in gasifying pulverized coal and coke inside the blast furnace.

As technology for decreasing carbon dioxide emissions in blast furnace operation, technologies such as described in Patent Literature (PTL) 1 and 2 have been proposed. According to these technologies, carbon monoxide and carbon dioxide contained in the by-product gas emitted from a blast furnace are reformed to generate hydrocarbons such as methane, and the generated hydrocarbon is then reintroduced into the blast furnace as a reducing agent.

CITATION LIST

Patent Literature

PTL 1: WO 2021/106578 A1
PTL 2: DE 102017006067 A1

SUMMARY

(Technical Problem)

However, the technologies described in PTL 1 and 2 have limitations in effectiveness in decreasing carbon dioxide emissions, and currently cannot adequately meet the demand for further decreases in carbon dioxide emissions.

In view of the above-described circumstances, it would be helpful to provide a method of operating a blast furnace that enables a further decrease in carbon dioxide emissions from a blast furnace under stable operation. Further, it would be helpful to provide a blast furnace ancillary apparatus for use in the method of operating a blast furnace. Hereinafter, any numerical range expressed using "to" means a range that includes the numerical values written before and after "to" as the lower limit and the upper limit, respectively, except when "more than", "less than", or the like is also written.

(Solution to Problem)

The inventors conducted intensive studies to solve the technical problems outlined above. As a result, the inventors discovered that the intended objective could be achieved by simultaneously satisfying the following points.

- As a blown-in reducing agent, a first reducing gas containing carbon monoxide and a second reducing gas containing at least one of a hydrocarbon or hydrogen are used.
- The first reducing gas is heated before being blown into the blast furnace.

The inventors conducted further intensive studies and made the following discoveries.

- When using the first reducing gas and the second reducing gas described above as the blown-in reducing agent, when there is temporal fluctuation in the chemical composition or particle size (hereinafter also referred to as operational fluctuation) of the charged raw material such as sintered ore, lump ore and pellets (hereinafter also referred to as ore material), and coke, the progress of the reduction reaction of the ore material inside the blast furnace will fluctuate

greatly.

- That is, when operational fluctuation occurs, for example, the reduction reaction of the ore material inside the blast furnace may be temporarily slowed, causing the ore material to descend to the bottom of the blast furnace without being reduced. As a result, unreduced ore material undergoes an endothermic reaction in the blast furnace lower portion, causing a heat deficiency in the blast furnace lower portion, which can lead to operational problems such as increased pressure loss and tapping failure.
- To prevent such operational problems, it is effective to set the ratio of the first reducing gas and the second reducing gas in the blown-in reducing agent using indicators of the blast furnace operating conditions, particularly at least one of a hot metal temperature or a tuyere-outlet temperature.
- Therefore, even when operational fluctuations occur, a further decrease in carbon dioxide emissions becomes possible from a blast furnace under stable operation.

The present disclosure is based on these discoveries and further studies. Primary features of the present disclosure are as follows.

1. A method of operating a blast furnace, the method comprising:

   a first heating process of heating a first reducing gas; and
   a blowing process of blowing a blast gas and a blown-in reducing agent into the blast furnace from a tuyere of the blast furnace,
   wherein the blown-in reducing agent contains the first reducing gas and a second reducing gas,
   and wherein the first reducing gas contains carbon monoxide and the second reducing gas contains at least one of a hydrocarbon or hydrogen.

2. The method of operating a blast furnace according to 1, above, wherein a blowing amount of the first reducing gas and a blowing amount of the second reducing gas in the blowing process are set according to indicators of blast furnace operating conditions.
3. The method of operating a blast furnace according to 2, above, wherein the indicators of the blast furnace operating conditions are a hot metal temperature and a tuyere-outlet temperature.
4. The method of operating a blast furnace according to any one of 1 to 3, above, wherein the concentration of carbon monoxide in the first reducing gas is 30 vol% or more, and the total concentration of the hydrocarbon and hydrogen in the second reducing gas is more than 70 vol%.
5. The method of operating a blast furnace according to any one of 1 to 4, above, further comprising a second heating process of heating the second reducing gas.
6. The method of operating a blast furnace according to any one of 1 to 5, above, wherein the second reducing gas contains methane as the hydrocarbon.
7. The method of operating a blast furnace according to any one of 1 to 6, above, wherein the oxygen concentration of the blast gas is 80 vol% or more.
8. The method of operating a blast furnace according to any one of 1 to 7, above, wherein a feed gas of at least one of the first reducing gas or the second reducing gas is steelworks by-product gas.
9. The method of operating a blast furnace according to 8, above, wherein carbon dioxide is separated from the steelworks by-product gas to obtain a carbon dioxide-containing gas and remaining gas,
   and wherein the remaining gas is used as a feed gas of the first reducing gas, and the carbon dioxide-containing gas is used as a feed gas of the second reducing gas.
10. The method of operating a blast furnace according to 8 or 9, above, wherein a surplus of at least one of the first reducing gas or the second reducing gas is supplied to a steelworks.
11. The method of operating a blast furnace according to any one of 1 to 10, above, wherein at least a portion of the second reducing gas is generated from steelworks by-product gas and hydrogen gas, and a blowing amount of the second reducing gas in the blowing process is set according to an available amount of the hydrogen gas.
12. A blast furnace ancillary apparatus comprising:

   a first reducing gas generation device configured to generate a first reducing gas;
   a second reducing gas generation device configured to generate a second reducing gas;
   a first heating device configured to heat the first reducing gas; and
   a gas blowing device comprising a reducing gas supply section configured to introduce the first reducing gas and the second reducing gas into a tuyere of a blast furnace, and a blast gas supply section configured to introduce a blast gas into the tuyere of the blast furnace,
   wherein

the first reducing gas contains carbon monoxide and the second reducing gas contains at least one of a hydrocarbon or hydrogen.

(Advantageous Effect)

According to the present disclosure, it becomes possible to further decrease carbon dioxide ($CO_2$) emissions from a blast furnace to outside while maintaining stable operation.

BRIEF DESCRIPTION OF THE DRAWINGS

In the accompanying drawings:

FIG. 1 is a diagram schematically illustrating an example of a blast furnace and blast furnace ancillary apparatus used in a method of operating a blast furnace according to an embodiment of the present disclosure;
FIG. 2A is a diagram schematically illustrating an example of a gas blowing device used in a method of operating a blast furnace according to an embodiment of the present disclosure;
FIG. 2B is a diagram schematically illustrating an example of a gas blowing device used in a method of operating a blast furnace according to an embodiment of the present disclosure;
FIG. 3 is a diagram schematically illustrating a blast furnace and blast furnace ancillary apparatus used in Reference Examples 1 and 3;
FIG. 4 is a diagram schematically illustrating an example of a blast furnace and blast furnace ancillary apparatus used in a method of operating a blast furnace according to an embodiment of the present disclosure;
FIG. 5 is a diagram schematically illustrating a blast furnace and blast furnace ancillary apparatus used in Reference Example 2; and
FIG. 6 is a diagram schematically illustrating a blast furnace and blast furnace ancillary apparatus used in Comparative Example 2.

DETAILED DESCRIPTION

The following describes embodiments of the present disclosure.
A method of operating a blast furnace according to an embodiment of the present disclosure includes:

a first heating process of heating a first reducing gas; and
a blowing process of blowing a blast gas and a blown-in reducing agent into the blast furnace from a tuyere of the blast furnace,
wherein the blown-in reducing agent contains the first reducing gas and a second reducing gas,
and wherein the first reducing gas contains carbon monoxide and the second reducing gas contains at least one of a hydrocarbon or hydrogen.

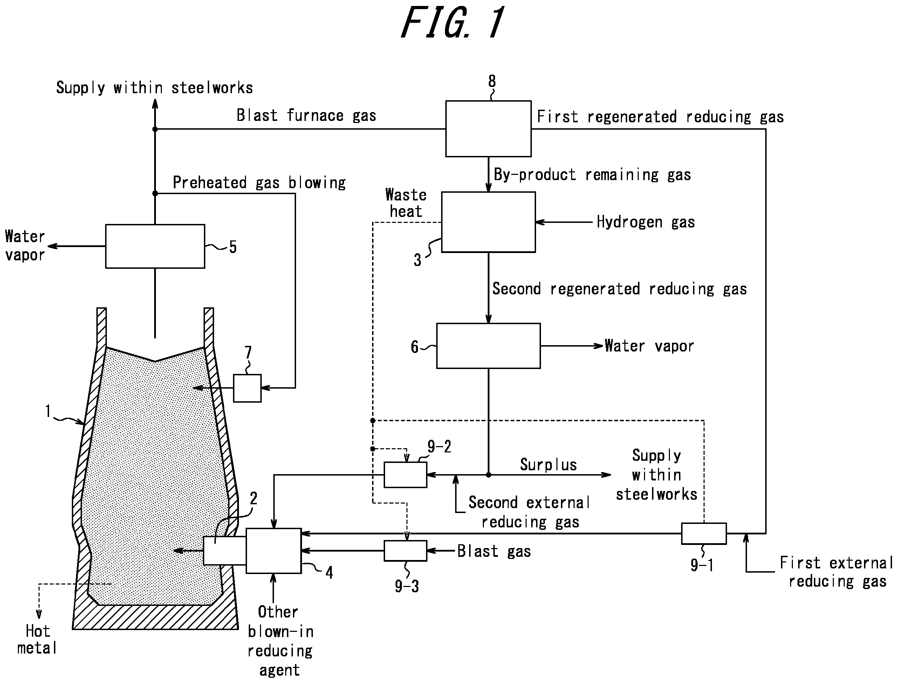

In blast furnace operation, for example, ore material, coke, and the like are charged into the blast furnace from the top. Further, blast gas and a reducing agent are blown into the blast furnace from tuyeres installed at a blast furnace lower portion. The reducing agent blown into the blast furnace from the tuyeres may also be referred to as blown-in reducing agent to distinguish from coke. Then, carbon monoxide and hydrogen generated by a reaction between the blast gas and the reducing agent reduce the ore material charged into the blast furnace. Carbon dioxide is generated in this reduction reaction of the ore material. The carbon dioxide, along with carbon monoxide, hydrogen, and the like that did not react with the ore material, is discharged from a top portion of the blast furnace as by-product gas. The top portion of a blast furnace is under a high-pressure condition of about 2.5 atm. Therefore, the by-product gas discharged from the top portion of the blast furnace (hereinafter also called blast furnace gas) expands and cools when returning to atmospheric pressure, causing water vapor to condense. Then, in a dewatering device, the condensed water is removed.
The following describes the first reducing gas and the second reducing gas of the method of operating a blast furnace according to an embodiment of the present disclosure, as well as each process, using examples of application to the blast furnace and blast furnace ancillary apparatus schematically illustrated in FIG. 1. In the diagram, reference sign 1 denotes a blast furnace, 2 denotes a tuyere, 3 denotes a second reducing gas generation device, 4 denotes a gas blowing device, 5 denotes a first dewatering device, 6 denotes a second dewatering device, 7 denotes a burner, 8 denotes a first reducing gas generation device, 9-1 denotes a first heating device, 9-2 denotes a second heating device, and 9-3 denotes a third heating device. Here, the term blast furnace includes shaft-type reduction furnaces and the like.

[First reducing gas]

The first reducing gas contains carbon monoxide. The balance of the first reducing gas, other than carbon monoxide, includes, for example, hydrogen ($H_2$), nitrogen ($N_2$), carbon dioxide ($CO_2$), water vapor ($H_2O$), and hydrogen sulfide ($H_2S$). Here, the higher the concentration of carbon monoxide and hydrogen in the first reducing gas, the more the reduction reaction of the ore material is accelerated. Therefore, in the first reducing gas, it is preferable to have high concentrations of carbon monoxide and hydrogen, which contribute to the reduction reaction. The concentration of carbon monoxide in the first reducing gas is preferably 30 vol% or more. The concentration is more preferably 40 vol% or more. The concentration is even more preferably 45 vol% or more. The concentration is even more preferably 47.5 vol% or more. The concentration of carbon monoxide in the first reducing gas may be 100 vol%. Further, the concentration of hydrogen in the first reducing gas is preferably 40 vol% or more. The concentration is more preferably 45 vol% or more. The concentration is even more preferably 47.5 vol% or more. Further, the total concentration of carbon monoxide and hydrogen in the first reducing gas is preferably 80 vol% or more. The total concentration is more preferably 90 vol% or more. The total concentration is even more preferably 95 vol% or more. The total concentration of carbon monoxide and hydrogen in the first reducing gas may be 100 vol%. Further, in order to prevent flow channel blockage due to carbon precipitation during heating, the concentration of hydrocarbon in the first reducing gas is preferably 5 vol% or less.

The first reducing gas can be generated using a gas containing carbon atoms (hydrocarbons such as CO, $CO_2$, $CH_4$), such as steelworks by-product gas, as a feed gas. Preferably, carbon dioxide is separated from the steelworks by-product gas to obtain a carbon dioxide-containing gas and remaining gas, of which the remaining gas is used as feed gas for the first reducing gas, and the carbon dioxide-containing gas is used as feed gas for the second reducing gas, which is described later. Examples of steelworks by-product gases include blast furnace gas, converter gas (by-product gas discharged from a converter), and a mixed gas thereof. Hereinafter, the first reducing gas generated from steelworks by-product gas may also be referred to as first regenerated reducing gas. Alternatively, the first regenerated reducing gas may be generated using second regenerated reducing gas, described later, as a feed gas.

For example, when using blast furnace gas as steelworks by-product gas, the blast furnace gas is introduced into the first reducing gas generation device, as illustrated in FIG. 1. Then, for example, by removing carbon dioxide from the blast furnace gas using a carbon dioxide separation method such as a pressure swing method or an amine absorption method, the first regenerated reducing gas can be generated. The method of generating the first regenerated reducing gas is not particularly limited. For example, the first regenerated reducing gas can be generated by reforming a gas containing a hydrocarbon such as methane and carbon dioxide as a feed gas, or by partially combusting hydrocarbon using a hydrocarbon-containing gas as a feed gas. Further, a portion of steelworks by-product gas may be extracted in its original composition and used as the first regenerated reducing gas.

In addition, the first reducing gas may be a gas supplied from outside a steelworks in accordance with the operations of the steelworks (hereinafter also referred to as first external reducing gas), or a mixture of the first regenerated reducing gas and the first external reducing gas may be used. The first external reducing gas can be produced, for example, by reforming a hydrocarbon gas such as natural gas.

Further, the preferred composition and concentration of the first regenerated reducing gas and the first external reducing gas are the same as the preferred composition and concentration of the first reducing gas described above.

Proportions of the first regenerated reducing gas and the first external reducing gas in the first reducing gas are not particularly limited and may be changed as appropriate according to operating conditions of the steelworks. Considering an amount of by-product gas generated at the steelworks, for example, the amount of the first regenerated reducing gas used is preferably 700 $Nm^3/t$ or less. The amount is more preferably 600 $Nm^3/t$ or less. Here, the unit "$Nm^3/t$" refers to the amount (in $Nm^3$) of gas used (blown into the blast furnace) when producing one tonne of hot metal. The same applies to the unit "kg/t", which is mentioned later.

Any surplus of steelworks by-product gas (other than the feed gas for the first regenerated reducing gas) can be supplied, for example, to another apparatus within the steelworks. Further, any surplus of the first reducing gas (other than that blown into the blast furnace) can be supplied, for example, to another apparatus within the steelworks. The same applies to a surplus of the second reducing gas, which is described below.

[Second reducing gas]

The second reducing gas contains at least one of a hydrocarbon ($C_iH_j$) or hydrogen. The hydrocarbon and hydrogen may be one type or a mixture of multiple types. The balance of the second reducing gas, other than the hydrocarbon and hydrogen, is, for example, nitrogen ($N_2$), carbon monoxide (CO), and carbon dioxide ($CO_2$). Further, when the hydrocarbon concentration and the hydrogen concentration of the second reducing gas decrease, the amount of gas blown into the blast furnace, and consequently the pressure loss of the blast furnace, may increase, potentially leading to a decrease in productivity. Further, as the gas circulation is repeated, the hydrocarbon concentration and hydrogen concentration of the second reducing gas relatively decrease. Therefore, the concentration of the hydrocarbon in the

second reducing gas is preferably more than 70 vol%. The concentration is more preferably 80 vol% or more. The concentration is even more preferably 90 vol% or more. The concentration is even more preferably 95 vol% or more. The concentration of the hydrogen in the second reducing gas is preferably more than 70 vol%. The concentration is more preferably 80 vol% or more. The concentration is even more preferably 90 vol% or more. The concentration is even more preferably 95 vol% or more. The concentration of the hydrocarbon in the second reducing gas may be 100 vol%. The concentration of the hydrogen in the second reducing gas may be 100 vol%. Further, the total concentration of the hydrocarbon and hydrogen in the second reducing gas is preferably 80 vol% or more. The total concentration is more preferably 90 vol% or more. The total concentration is even more preferably 95 vol% or more. The total concentration of the hydrocarbon and hydrogen in the second reducing gas may be 100 vol%. The concentration of the balance other than the hydrocarbon and hydrogen in the second reducing gas is preferably less than 30 vol%. The concentration is more preferably 20 vol% or less. The concentration is even more preferably 10 vol% or less. The concentration is even more preferably 5 vol% or less. The concentration of the balance other than the hydrocarbon and hydrogen in the second reducing gas may be 0 vol%.

Further, as the hydrocarbon, a hydrocarbon having four or fewer carbon atoms in the molecule is preferred. Using a hydrocarbon having five or more carbon atoms in the molecule can cause soot to be generated at the tuyeres, potentially reducing the conversion efficiency of the hydrocarbon into carbon monoxide and hydrogen inside the blast furnace. Examples of preferred hydrocarbons include methane, ethylene, and propane.

The second reducing gas can be generated using a gas containing at least one of carbon monoxide or carbon dioxide, such as steelworks by-product gas, as the feed gas. Examples of steelworks by-product gases include blast furnace gas, converter gas, and a mixed gas thereof. Further, steelworks by-product gases also include remaining gas after the first reducing gas is generated by introducing steelworks by-product gas, such as blast furnace gas, into the first reducing gas generation device, as illustrated in FIG. 1 (hereinafter also referred to as post-generation gas), as well as gas extracted by separating only a portion of the composition from steelworks by-product gas, such as blast furnace gas, using a carbon dioxide separation device or the like. Among these, post-generation gas is preferred. By using the post-generation gas as a feed gas, the carbon dioxide generated and remaining when generating the first reducing gas can be reused as the second reducing gas without being released to the outside, thus further decreasing carbon dioxide emissions. Hereinafter, the second reducing gas generated from steelworks by-product gas may also be referred to as second regenerated reducing gas.

For the second regenerated reducing gas, for example, when using the post-generation gas as a feed gas, the post-generation gas is introduced into the second reducing gas generation device as illustrated in FIG. 1. Then, in the second reducing gas generation device, carbon monoxide and carbon dioxide contained in the feed gas are reacted with hydrogen contained in separately supplied hydrogen gas to form a hydrocarbon, thereby generating a second regenerated reducing gas. The second regenerated reducing gas may optionally have water vapor removed. For example, water vapor is condensed by cooling the second regenerated reducing gas to near room temperature, and the condensed water is removed in a second dewatering device, as illustrated in FIG. 1.

The hydrogen gas used to generate the second regenerated reducing gas may be supplied from an external source, or steelworks by-product gases may be used, such as coke oven gas (by-product gas discharged from a coke oven) that is mainly composed of hydrogen, or blast furnace gas that contains a certain amount of hydrogen. Coke oven gas and blast furnace gas contain carbon monoxide in addition to hydrogen, and therefore these gases may be used after separating and extracting the hydrogen using a method such as PSA. Further, coke oven gas has a high hydrogen concentration, and therefore can be used as hydrogen gas without separation. When hydrogen gas is supplied from an external source, the method of producing the hydrogen gas is not particularly limited. A preferred method of producing the hydrogen gas is one that minimizes the generation of carbon dioxide, such as electrolysis of water.

Further, in order to increase the concentration of the hydrocarbon or hydrogen in the second regenerated reducing gas, the hydrogen concentration of the hydrogen gas is preferably 80 vol% or more. The hydrogen concentration is more preferably 90 vol% or more. The hydrogen concentration is even more preferably 95 vol% or more. The hydrogen concentration of the hydrogen gas may be 100 vol%. The balance of the hydrogen gas, other than hydrogen, includes, for example, nitrogen ($N_2$), carbon monoxide (CO), carbon dioxide ($CO_2$), hydrogen sulfide ($H_2S$), and methane ($CH_4$). Further, such hydrogen gas may be used as the second reducing gas.

In addition, the second reducing gas may be a gas supplied from outside the steelworks in accordance with the operations of the steelworks (hereinafter also referred to as second external reducing gas), or, as illustrated in FIG. 1, a mixture of the second regenerated reducing gas and the second external reducing gas may be used. The second external reducing gas is, for example, a hydrocarbon or hydrogen-containing gas produced outside the steelworks, such as methane gas, natural gas, city gas, ethylene gas, propane gas, or hydrogen gas. Steelworks by-product gases may be provided outside the steelworks, gases containing a hydrocarbon such as methane may be generated outside the steelworks, and these gases may be brought back into the steelworks.

Further, the preferred composition and concentration of the second regenerated reducing gas and the second external reducing gas are the same as the preferred composition and concentration of the second reducing gas described

above.

Proportions of the second regenerated reducing gas and the second external reducing gas in the second reducing gas are not particularly limited and may be changed as appropriate according to operating conditions of the steelworks. Further, from the perspective of decreasing carbon dioxide emissions, it is preferable that the amount of the second regenerated reducing gas used in the second reducing gas is greater. For example, the proportion of the second regenerated reducing gas in the second reducing gas is preferably 80 vol% or more. The proportion is more preferably 90 vol% or more. The proportion of the second regenerated reducing gas in the second reducing gas may be 100 vol%. Further, when the concentration of the hydrocarbon and hydrogen in the second reducing gas decreases, it is possible to maintain the concentration of the hydrocarbon and hydrogen in the second reducing gas above a certain level by decreasing the proportion of the second regenerated reducing gas while increasing the proportion of the second external reducing gas that has a higher concentration of the hydrocarbon and hydrogen.

In addition to the first reducing gas and the second reducing gas, other blown-in reducing agents, such as pulverized coal or waste plastic, may also be used as the blown-in reducing agent. The total amount of other blown-in reducing agents blown into the blast furnace is preferably 150 kg/t or less. The total amount is more preferably 100 kg/t or less. The total amount is even more preferably 50 kg/t or less. The amount of other blown-in reducing agents blown into the blast furnace may be 0 kg/t.

Further, in the method of operating a blast furnace according to an embodiment of the present disclosure, it is important to simultaneously use (blow into the blast furnace) the first reducing gas and the second reducing gas as the blown-in reducing agent. Further, it is preferable to appropriately control the ratio of the first reducing gas and the second reducing gas in the blown-in reducing agent. When only the first reducing gas is used as the blown-in reducing agent then, for example, when the hydrogen concentration inside the blast furnace decreases due to operational fluctuations, causing a temporary slowing of the progress of the reduction reaction of the ore material inside the blast furnace, the delay in the progress of the reduction reaction may not be recovered, and the ore material may descend to the bottom of the blast furnace unreduced. As a result, unreduced ore material undergoes an endothermic reaction in the blast furnace lower portion, causing a heat deficiency in the blast furnace lower portion, which can lead to operational problems such as a decrease in hot metal temperature, an increase in pressure loss, and tapping failure. Further, using only the second reducing gas as the blown-in reducing agent does not yield a sufficient decrease in carbon dioxide emissions. In this regard, the first reducing gas and the second reducing gas are used simultaneously in the blown-in reducing agent, and preferably, the ratio of the first reducing gas and the second reducing gas in the blown-in reducing agent is appropriately controlled, for example, as described later. Therefore, even when operational fluctuations occur, a further decrease in carbon dioxide emissions becomes possible from the blast furnace under stable operation.

[Blast gas]

The blast gas is gas that is blown into the blast furnace through the tuyeres, and has a role of gasifying coke and pulverized coal. The type of blast gas is not particularly limited. Examples of blast gases include gases having an oxygen concentration of 21 vol% to 100 vol% (such as air, oxygen-enriched air, or oxygen gas). In particular, from the viewpoint of enhancing the carbon dioxide emission decrease effect by blowing large amounts of the first reducing gas and the second reducing gas from the tuyeres, the oxygen concentration of the blast gas is preferably 80 vol% or more. The oxygen concentration is more preferably 90 vol% or more. The oxygen concentration is even more preferably 95 vol% or more. The oxygen concentration of the blast gas may be 100 vol%. The balance of the blast gas, other than oxygen, is, for example, nitrogen ($N_2$), carbon dioxide ($CO_2$), and argon (Ar).

In particular, when the oxygen concentration of the blast gas is 90 vol% or more, the concentration of impurity gases (such as nitrogen) in the blast furnace gas decreases. Therefore, when generating the second regenerated reducing gas using blast furnace gas as a feed gas, it is possible to maintain a high hydrocarbon concentration (approximately 90 vol%) in the second reducing gas without supplying the second external reducing gas, which is extremely advantageous. Further, when generating the first regenerated reducing gas using blast furnace gas as a feed gas, it is possible to prevent the accumulation of an impurity gas (such as nitrogen) in the first reducing gas during repeated gas circulation, which would cause a relative decrease in the carbon monoxide concentration and hydrogen concentration of the first reducing gas. For similar reasons, when generating the second regenerated reducing gas using blast furnace gas as a feed gas, it is also possible to suppress a relative decrease in the hydrocarbon concentration of the second reducing gas. Further, the volume of gas flowing through each piece of equipment, such as the blast furnace and various reducing gas generation devices, is decreased, and therefore this is also highly advantageous in terms of downsizing equipment and improving productivity by decreasing pressure loss in the blast furnace.

When the tuyere-outlet temperature drops excessively, the risk of operational problems such as insufficient heat transfer in the blast furnace lower portion, increased pressure loss, and tapping failure increases. In this regard, by increasing the oxygen concentration of the blast gas, the tuyere-outlet temperature can be controlled to an appropriate range of 1900 °C to 2500 °C, preferably 2000 °C to 2400 °C, even when using large amounts of the first reducing gas and

the second reducing gas. Therefore, it becomes possible to suppress the occurrence of operational problems like those described above and ensure stable operations, while significantly decreasing the amount of reducing agents other than the first reducing gas and the second reducing gas, such as coke, and consequently further decreasing carbon dioxide emissions.

[First heating process]

In a first heating process, the first reducing gas is heated. Of the amount of heat required for blast furnace operation, instead of the amount of heat that had been supplied as reaction heat when carbon contained in coke is gasified by oxygen, the first reducing gas blown in through the tuyeres is heated and supplied to the blast furnace as sensible heat. This makes it possible to further decrease the amount of carbon used from reducing agents such as coke, and consequently, the amount of carbon dioxide emitted from the blast furnace.

Here, the heating temperature (supply temperature) of the first reducing gas is preferably 700 °C or higher. That is, carbon monoxide contained in the first reducing gas is stable even at high temperatures. Further, the effect of decreasing carbon dioxide emissions improves as the heating temperature of the first reducing gas increases. In addition, when the heating temperature of the first reducing gas falls below 700 °C, the carbon monoxide contained in the first reducing gas undergoes the following reaction.

$$2CO \rightarrow C + CO_2$$

This can lead to the precipitation of solid carbon, which poses a risk of disrupting apparatus operation due to pipe deterioration and blockage. On the other hand, when the heating temperature of the first reducing gas is 700 °C or higher, the precipitation of solid carbon is suppressed. Therefore, the heating temperature of the first reducing gas is preferably 700 °C or higher. The heating temperature of the first reducing gas is more preferably 800 °C or higher. The heating temperature is even more preferably 1000 °C or higher. Further, there is no particular upper limit to the heating temperature of the first reducing gas. The heating temperature of the first reducing gas is preferably 1300 °C or lower, for example, because this can decrease the rate of apparatus deterioration.

The heating in the first heating process may be carried out, for example, by the first heating device described later. The heating in a second heating process and a third heating process, described later, can also be carried out, for example, by the second heating device and the third heating device, described later.

[Second heating process]

In the optional second heating process, the second reducing gas is heated. By heating the first reducing gas and also heating the second reducing gas, the effect of decreasing carbon dioxide emissions is further enhanced.

Here, in order to sufficiently enhance the effect of decreasing carbon dioxide emissions and, in particular, to suppress problems such as pipe blockage due to the liquefaction of higher hydrocarbons, the heating temperature (supply temperature) of the second reducing gas is preferably at least the boiling point of the hydrocarbon contained in the second reducing gas. The heating temperature is more preferably 100 °C or higher. The heating temperature is even more preferably 200 °C or higher. However, when the heating temperature of the second reducing gas exceeds 450 °C, the hydrocarbon contained in the second reducing gas undergoes thermal decomposition (for example, $CH_4 \rightarrow C + 2H_2$, $C_3H_8 \rightarrow 3C + 4H_2$, and the like), generating solid carbon, which may cause problems such as pipe blockage due to solid carbon. Therefore, the heating temperature of the second reducing gas is preferably 600 °C or lower. The heating temperature is more preferably 450 °C or lower. Further, when the second reducing gas does not contain a hydrocarbon, there is no risk of thermal decomposition, so the heating temperature of the second reducing gas can be 1300 °C or lower, the same as the heating temperature of the first reducing gas.

[Third heating process]

In the optional third heating process, the blast gas is heated. By heating the first reducing gas and also heating the blast gas, the effect of decreasing carbon dioxide emissions is further enhanced.

Here, from the viewpoint of enhancing the effect of decreasing carbon dioxide emissions, the heating temperature (supply temperature) of the blast gas is preferably in a range from 300 °C to 1300 °C. The heating temperature is more preferably in a range from 1000 °C to 1300 °C.

However, when the oxygen concentration of the blast gas exceeds 35 vol%, the heating temperature of the blast gas may be in a range from 300 °C to 800 °C from the viewpoint of suppressing deterioration and extending the lifespan of the blast gas heating apparatus.

[Blowing process]

Next, the first reducing gas and the second reducing gas, in other words the blown-in reducing agent, and the blast gas are blown into the blast furnace from the tuyeres of the blast furnace.

Here, the blowing amount of the blast gas is preferably 200 $Nm^3/t$ to 1300 $Nm^3/t$. The blowing amount of the first reducing gas is preferably 100 $Nm^3/t$ to 220 $Nm^3/t$. The blowing amount of the second reducing gas is preferably 70 $Nm^3/t$ to 500 $Nm^3/t$. Further, a ratio of the blowing amount of the first reducing gas ($Nm^3/t$) to the blowing amount of the second reducing gas ($Nm^3/t$) is preferably 1:0.3 to 1:2.5. In particular, when the second reducing gas is mainly methane, the blowing amount of the second reducing gas is more preferably 110 $Nm^3/t$ to 220 $Nm^3/t$, and the ratio of the blowing amount of the first reducing gas ($Nm^3/t$) to the blowing amount of the second reducing gas ($Nm^3/t$) is more preferably 1:0.5 to 1:2.0.

Further, as mentioned above, when using the first reducing gas and the second reducing gas as the blown-in reducing agent, operational fluctuations can cause, for example, a temporary slowing of the progress of the reduction reaction of the ore material inside the blast furnace, which may result in the ore material descending to the lower portion of the blast furnace without being reduced. As a result, unreduced ore material undergoes an endothermic reaction in the blast furnace lower portion, causing a heat deficiency in the blast furnace lower portion, which can lead to operational problems such as increased pressure loss and tapping failure. Further, when the reduction reaction of the ore material proceeds too quickly, an excess of reducing agent is supplied, leading to an unnecessary increase in $CO_2$ emissions, which is a problem.

Here, the progress of the reduction reaction of the ore material and the heat supply conditions at the blast furnace lower portion can be ascertained by indicators of the blast furnace operating conditions, such as the hot metal temperature and the tuyere-outlet temperature. For example, when the reduction reaction proceeds slowly and unreduced ore material descends to the lower portion of the blast furnace, the hot metal temperature decreases. Conversely, when the reduction reaction is accelerated, the hot metal temperature increases.

Further, the higher the proportion of the first reducing gas in the blown-in reducing agent, the greater the effect of decreasing carbon dioxide emissions. However, this lowers the hydrogen concentration inside the blast furnace, slowing down the reduction rate of the ore material. On the other hand, the higher the proportion of the second reducing gas, the higher the hydrogen concentration inside the blast furnace, and the faster the reduction rate of the ore material.

Therefore, by setting the blowing amount of the first reducing gas and the blowing amount of the second reducing gas using indicators of blast furnace operating conditions, it becomes possible to further decrease carbon dioxide emissions from the blast furnace under stable operation, even when operational fluctuations occur.

For example, when using hot metal temperature and tuyere-outlet temperature as indicators of blast furnace operating conditions, then when the hot metal temperature falls below a reference temperature range, at least one of the following is carried out: decreasing the blowing amount of the first reducing gas or increasing the blowing amount of the second reducing gas. On the other hand, when the hot metal temperature exceeds the reference temperature range, at least one of the following is carried out: increasing the blowing amount of the first reducing gas or decreasing the blowing amount of the second reducing gas. The reference temperature range for the hot metal temperature can be set, for example, preferably from 1500 °C to 1550 °C.

Further, when the tuyere-outlet temperature falls below the reference temperature range, at least one of the following is carried out: decreasing the blowing amount of the first reducing gas or decreasing the blowing amount of the second reducing gas. On the other hand, when the tuyere-outlet temperature exceeds the reference temperature range, at least one of the following is carried out: increasing the blowing amount of the first reducing gas or increasing the blowing amount of the second reducing gas. The reference temperature range for the tuyere-outlet temperature can be set, for example, preferably from 1900 °C to 2500 °C. The reference temperature range is more preferably from 2000 °C to 2400 °C.

Further, when increasing or decreasing the blowing amounts of the first reducing gas and the second reducing gas (hereinafter also referred to as blowing amount adjustment), the amount of increase or decrease in the blowing amounts of the first reducing gas and the second reducing gas (hereinafter also referred to as the adjustment amounts for the first reducing gas and the second reducing gas) can be selected according to the deviation of the hot metal temperature and the tuyere-outlet temperature from the reference temperature range. For example, the adjustment amounts for the first reducing gas and the second reducing gas can each be selected from a range of 5 $Nm^3/t$ to 30 $Nm^3/t$.

When the hot metal temperature and the tuyere-outlet temperature do not fall in the reference temperature range after blowing amount adjustment carried out once, the blowing amount adjustment may be carried out multiple times. As a result of blowing amount adjustment, the blowing amount of the first reducing gas may temporarily become zero (a state in which only the second reducing gas is blown in). Similarly, as a result of blowing amount adjustment, the blowing amount of the second reducing gas may temporarily become zero (a state in which only the first reducing gas is blown in).

Further, it is preferable to keep both the hot metal temperature and the tuyere-outlet temperature in the appropriate range at the same time, and therefore it is more preferable to use both the hot metal temperature and the tuyere-outlet temperature as indicators of the blast furnace operating conditions.

Further, indicators of blast furnace operating conditions may also be other indicators that correspond to the reduction and heat generation states of the blast furnace. For example, a gas utilization rate calculated from the composition of the blast furnace gas using the following expression can be used. The slower the reduction reaction proceeds, the lower the gas utilization rate becomes.

[Gas utilization rate (%)] = [$CO_2$ concentration of blast furnace gas (vol%)] / ([CO concentration of blast furnace gas (vol%)] + [$CO_2$ concentration of blast furnace gas (vol%)]) $\times$ 100

In addition, when generating the second reducing gas using steelworks by-product gas as a feed gas (second regenerated reducing gas), it may be necessary to use a large amount of hydrogen gas supplied from outside the steelworks. It is anticipated that hydrogen gas will be produced in the future using renewable energy sources such as solar power and hydroelectric power through electrolytic production. However, stable supply from renewable energy sources is difficult because output fluctuates greatly depending on weather conditions and the like. Therefore, the available amount of hydrogen gas fluctuates greatly from day to day, and it is conceivable that this may result in an insufficient supply of the second reducing gas. Therefore, it is preferable to set the blowing amount of the second reducing gas based on the available amount of hydrogen gas (the amount of hydrogen gas that can be used to generate the second regenerated reducing gas). When the hydrogen supply is unstable, the blowing amount of the second reducing gas may temporarily become zero (a state in which only the first reducing gas is blown in). Further, the blowing amount of the first reducing gas may be adjusted simultaneously in accordance with the blowing amount of the second reducing gas or the like.

Other operating conditions are not particularly limited and may follow conventional methods, depending on the blast furnace capacity or the like. Each gas can be blown in, for example, using a gas blowing device as described later.

An increase in the oxygen concentration in the blast gas can decrease the amount of gas inside the furnace, which may result in insufficient heating of the charge material at the top of the blast furnace. In such a case, as illustrated in FIG. 1, it is preferable to carry out preheated gas blowing, in which gas preheated to approximately 800 °C to 1000 °C is blown into the blast furnace shaft. As the preheated gas, for example, gas obtained by partially combusting a portion of blast furnace gas downstream of the first dewatering device or gas heated by electric heating can be used.

Further, coke charged into the blast furnace from the top of the furnace preferably has a drum strength index $DI^{150}_{15}$ of 82.0 or more, from the viewpoint of accelerating the progress of the reduction reaction of the ore and enhancing the effect of decreasing carbon dioxide emissions. Here, the drum strength index $DI^{150}_{15}$ is an index representing the strength of coke obtained by a drum method as defined in JIS K 2151:2004, and is the percentage of a sample remaining on a 15 mm sieve after 150 rotations using a drum testing machine.

[Blast furnace ancillary apparatus]

Blast furnace ancillary apparatus according to an embodiment of the present disclosure is blast furnace ancillary apparatus that can be suitably used in the method of operating a blast furnace.

That is, the blast furnace ancillary apparatus according to an embodiment of the present disclosure includes:

a first reducing gas generation device configured to generate a first reducing gas;
a second reducing gas generation device configured to generate a second reducing gas;
a first heating device configured to heat the first reducing gas; and
a gas blowing device comprising a reducing gas supply section configured to introduce the first reducing gas and the second reducing gas into a tuyere of a blast furnace, and a blast gas supply section configured to introduce a blast gas into the tuyere of the blast furnace,
wherein
the first reducing gas contains carbon monoxide and the second reducing gas contains at least one of a hydrocarbon or hydrogen.

An example of the blast furnace ancillary apparatus according to an embodiment of the present disclosure is the blast furnace ancillary apparatus illustrated in FIG. 1.

Here, the first reducing gas generation device includes, for example, a feed gas intake section and a carbon dioxide separation section. The carbon dioxide separation section may be capable of separating carbon dioxide by methods such as a pressure swing method or an amine absorption method. When carbon dioxide separation is carried out by the pressure swing method, the carbon dioxide separation section includes, for example, an adsorption tower loaded with an adsorbent such as zeolite or activated carbon, and a compressor. When carbon dioxide separation is carried out by the amine absorption method, the carbon dioxide separation section includes, for example, an absorption tower that brings carbon dioxide into contact with an absorbent solution (amine aqueous solution), and a regeneration tower that heats the

absorbent solution that has absorbed carbon dioxide to recover the carbon dioxide. As an example of a feed gas for the first reducing gas, the steelworks by-product gas described above can be used.

Here, the second reducing gas generation device includes, for example, a feed gas intake section, a hydrogen gas intake section, and a reaction section. In the reaction section, the feed gas taken in from the feed gas intake section reacts with the hydrogen gas taken in from the hydrogen gas intake section to generate the second reducing gas containing a hydrocarbon. Hydrocarbon generation reactions generate heat, and therefore the reaction section preferably has a cooling mechanism. As a feed gas for the second reducing gas, the steelworks by-product gas described above can be used as an example.

The first heating device heats the first reducing gas. Heating can be carried out, for example, by an electric heater or a heat exchanger (such as a heat exchanger that uses high-temperature gas as a medium).

The electrical power used for electric heating is not particularly limited, but it is preferable to use electrical power derived from renewable energy sources or electrical power generated by power generation apparatus within the steelworks. Using electrical power derived from renewable energy sources can further decrease carbon dioxide emissions. Here, renewable energy refers to energy that is readily available in nature, such as solar, wind, hydro, geothermal, and biomass. Using electrical power generated by power generation apparatus within the steelworks makes it possible to construct a more efficient resource recycling system. Examples of power generation apparatus within the steelworks include blast furnace top gas pressure power generation apparatus and power generation apparatus that uses blast furnace gas as fuel (heat source). In power generation apparatus that uses blast furnace gas as fuel (heat source), coke oven gas, converter gas, and city gas can also be used as fuel, depending on the operating conditions of the blast furnace.

Further, the heat exchange medium (heat source) can be the waste heat from blast furnace gas, the heat from generation of the second reducing gas (waste heat from the second reducing gas generation device), the heat from generation of hydrogen produced by the electrolysis of water, or the like.

The first heating device may be positioned downstream of the supply lines for the first regenerated reducing gas and the first external reducing gas, as illustrated in FIG. 1. Alternatively, the first heating device may be disposed on the supply lines for the first regenerated reducing gas and the first external reducing gas, and after heating the first regenerated reducing gas and the first external reducing gas, these gases may be supplied directly or combined to the reducing gas supply section of the gas blowing device. The same applies to the second reducing gas. When the second regenerated reducing gas and the second external reducing gas are combined and then supplied to the reducing gas supply section of the gas blowing device, for example, as illustrated in FIG. 1, the supply line for the second external reducing gas can be connected to the second regenerated reducing gas flow passage between the second dewatering device and the second heating device.

In the optional second heating device, the second reducing gas is heated. The configuration of the device is the same as that of the first heating device described above. Further, it is preferable to provide separate heating devices for the first heating device and the second heating device, each tailored to the suitable heating temperatures of the first reducing gas and the second reducing gas described above. However, when downsizing of apparatus is required, the first reducing gas, the second reducing gas, and other blown-in reducing agents may be mixed, and the first heating device may simultaneously heat the first reducing gas, the second reducing gas, and other blown-in reducing agents.

Further, the optional third heating device heats the blast gas. The configuration of the device is the same as that of the first heating device described above. Further, when the oxygen concentration of the blast gas is less than 30 vol%, a regenerative heat exchanger, such as a hot air oven used in a typical blast furnace, may be used. Alternatively, the blast gas may be heated using a heat storage type heat exchanger, and then oxygen may be mixed in to increase the oxygen concentration of the blast gas.

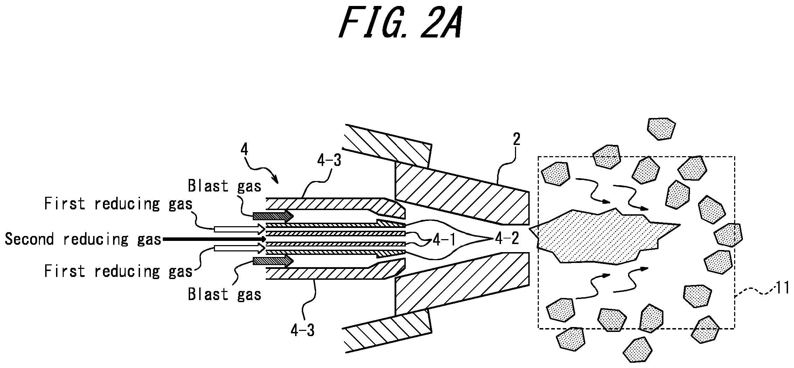

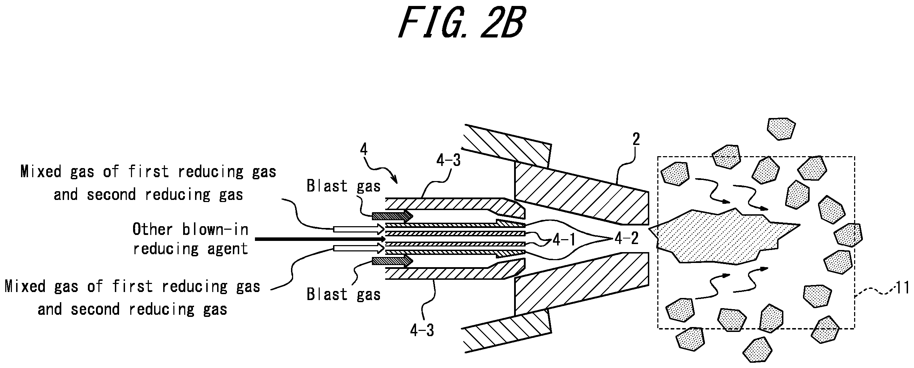

The gas blowing device includes the reducing gas supply section configured to introduce the first reducing gas and the second reducing gas into the tuyere of the blast furnace, and the blast gas supply section configured to introduce the blast gas into the tuyere of the blast furnace. The gas blowing device is composed of a coaxial multiple pipe system, which includes a central pipe, an outer pipe, and an inner pipe between the central pipe and the outer pipe, as illustrated in FIG. 2A and FIG. 2B, for example. In the drawings, reference sign 2 denotes the tuyere, 4 denotes the gas blowing device, 4-1 denotes the central pipe, 4-2 denotes the inner pipe, 4-3 denotes the outer pipe, and 11 denotes a raceway.

According to the embodiment illustrated in FIG. 2A, a central pipe internal passage and an annular pipe between the central pipe and the inner pipe serve as the reducing gas supply section, with the second reducing gas introduced from the central pipe internal passage and the first reducing gas introduced from the annular pipe between the central pipe and the inner pipe. Further, an annular passage between the inner pipe and the outer pipe serves as the blast gas supply section, and the blast gas is introduced from the annular passage between the inner pipe and the outer pipe. While a simple multiple pipe system is acceptable, it is preferable to provide a highly agitating flow path such as a porous structure or a swirling structure to promote gas mixing.

Further, according to the embodiment illustrated in FIG. 2B, the central pipe internal passage and the annular passage between the central pipe and the inner pipe serve as the reducing gas supply section, with other blown-in reducing agents being introduced from the central pipe internal passage and a mixed gas of the first reducing gas and the

second reducing gas being introduced from the annular passage between the central pipe and the inner pipe. Further, the annular passage between the inner pipe and the outer pipe serves as the blast gas supply section, and the blast gas is introduced from the annular passage between the inner pipe and the outer pipe.

Further, the flow paths for the first reducing gas, the second reducing gas, and other blown-in reducing agents may be made independent of each other. In particular, when using solid reducing agents such as pulverized coal or waste plastic as other blown-in reducing agents, it is preferable to provide a separate reducing agent supply section (path) for circulating the solid reducing agent, separate from the supply sections for the first reducing gas and the second reducing gas.

In addition, to promote the combustion and gasification of reducing agents, it is preferable to have a porous structure for the discharge section of the outer pipe that constitutes the blast gas supply section. This promotes the mixing of the blast gas and the blown-in reducing agent.

As illustrated in FIG. 2A and FIG. 2B, the blown-in reducing agent and the blast gas introduced from the gas blowing device are mixed inside the tuyere. This mixed gas undergoes rapid ignition and combustion immediately after being blown into the blast furnace through the tuyere. Then, a raceway is formed inside the blast furnace at the outlet of the tuyere, which is a region where the blown-in reducing agent or coke reacts with oxygen gas.

Configurations other than described above are not particularly limited, and a conventional method may be used.

EXAMPLES

• Examples 1

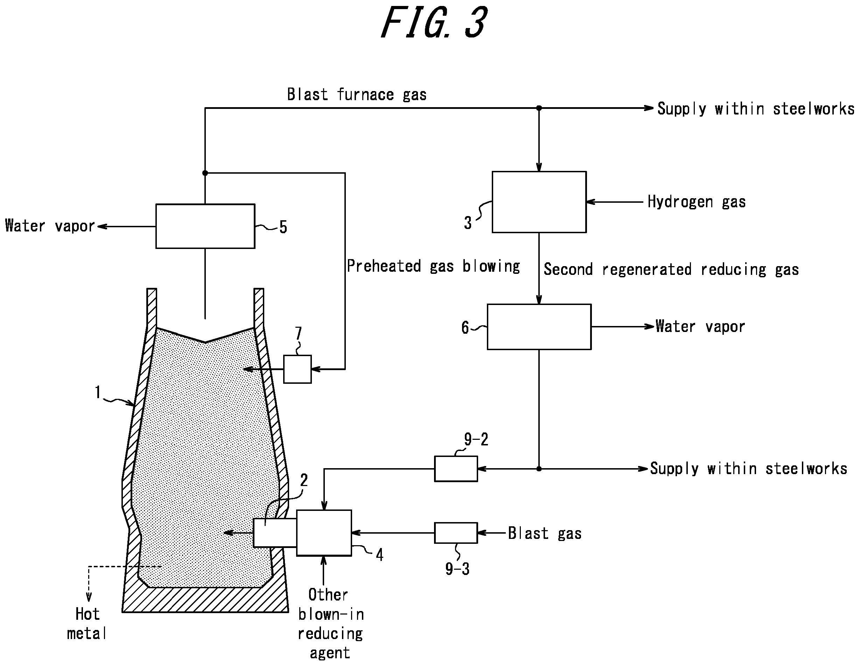

Numerical analysis was carried out to simulate blast furnace operation under the conditions listed in Table 1, using a thermal-mass balance analysis of a blast furnace that reproduces the blast furnace and the blast furnace ancillary apparatus schematically illustrated in FIG. 1 (Examples 1 to 4 according to the present disclosure, Comparative Example 1 (in Comparative Example 1, no first heating device ), Comparative Example 2 (in Comparative Example 2, no blowing in of the second reducing gas)) or FIG. 3 (Reference Example 1), and the carbon dioxide emissions from the blast furnace were evaluated. For comparative purposes, the blast furnace specifications were standardized as much as possible, and the heat loss was set to 150,000 kcal/t. The first reducing gas was entirely the first regenerated reducing gas. The second reducing gas was entirely the second regenerated reducing gas. The heating by each heating device was electric heating.

Here, the unit "kcal/t" refers to the amount of heat loss (kcal) generated when producing one tonne of hot metal. The unit "kg/t," used in terms such as the coke rate, refers to the amount of coke or the like (in kg) used to produce one tonne of hot metal. The unit "$Nm^3/t$," used for the blowing amount of each gas also refers to the amount of each gas ($Nm^3$) blown into the blast furnace when producing one tonne of hot metal. Further, "Input C" in the table refers to the mass (kg) of externally derived carbon atoms used in the production of one tonne of hot metal (specifically, carbon atoms contained in coke, other reducing agents (pulverized coal), the first external reducing gas, and the second external reducing gas).

The following criteria were used to evaluate the effect of decreasing carbon dioxide emissions under stable operation (hereinafter also referred to as the carbon dioxide decrease effect under stable operation). The evaluation results are indicated in Table 1. Comparative Example 1 corresponds to the operation described in PTL 2.

Pass: the hot metal temperature was 1500 °C to 1550 °C, the tuyere-outlet temperature was 1900 °C to 2500 °C (preferably 2000 °C to 2400 °C), and the amount of carbon dioxide emitted was less than the amount specified for Reference Example 1 (corresponding to the operation in PTL 1, where only the second reducing gas is used as the blown-in reducing agent).

Fail: at least one of the following conditions was not met: the hot metal temperature was 1500 °C to 1550 °C, the tuyere-outlet temperature was 1900 °C to 2500 °C, or the amount of carbon dioxide emitted was less than the amount specified for Reference Example 1.

Table 1

| | | | Reference Example 1 | Comparative Example 1 | Comparative Example 2 | Example 1 | Example 2 | Example 3 | Example 4 |
|---|---|---|---|---|---|---|---|---|---|
| Shaft efficiency | | - | 0.85 | 0.85 | 0.80 | 0.85 | 0.85 | 0.85 | 0.84 |
| Reducing agent other than first reducing gas and second reducing gas | Coke rate | kg/t | 381 | 396 | 377 | 377 | 357 | 317 | 314 |
| | Pulverized coal rate | kg/t | 0 | 0 | 0 | 0 | 0 | 0 | 0 |
| First reducing gas | Blowing amount | $Nm^3/t$ | 0 | 100 | 583 | 200 | 100 | 200 | 200 |
| | CO concentration | vol% | - | 55 | 90 | 57 | 51 | 48 | 54 |
| | $CO+H_2$ concentration | vol% | - | 100 | 100 | 100 | 100 | 100 | 100 |
| | Heating carried out | - | - | no | yes | yes | yes | yes | yes |
| | Temperature | °C | - | 25 | 900 | 900 | 900 | 900 | 900 |
| Second reducing gas | Type | - | methane | methane | - | methane | methane | methane | propane |
| | Blowing amount | $Nm^3/t$ | 213 | 178 | 0 | 139 | *200* | 191 | 78 |
| | Hydrocarbon concentration | vol% | 100 | 100 | - | 100 | 100 | 100 | 100 |
| | Heating carried out | - | no | no | - | no | yes | yes | no |
| | Temperature | °C | 25 | 25 | - | 25 | 450 | 450 | 25 |
| Blast gas | Oxygen concentration | vol% | 100 | 100 | 100 | 100 | 100 | 100 | 100 |
| | Blowing amount | $Nm^3/t$ | *350* | 342 | 212 | 305 | 323 | 282 | 301 |
| | Heating carried out | - | no | no | no | no | no | yes | no |
| | Blast temperature | °C | 25 | 25 | 25 | 25 | 25 | 800 | 25 |
| Input C | | kg/t | 332 | 345 | 329 | 329 | 312 | 276 | 274 |
| $CO_2$ emission | | kg/t | 1219 | 1266 | 1207 | 1207 | 1144 | 1014 | 1005 |
| Hot metal temperature | | °C | 1524 | 1524 | 1454 | 1524 | 1524 | 1524 | 1524 |
| Tuyere-outlet temperature | | °C | 2069 | 2083 | 2273 | 2156 | 2000 | 2001 | 2060 |
| Evaluation results | | - | - | fail | fail | pass | pass | pass | pass |

As indicated in Table 1, all of the Examples 1 to 4 demonstrated an excellent carbon dioxide decrease effect under stable operation. In particular, for Example 3, for which the first reducing gas and the second reducing gas were used as the blown-in reducing agent, and all of the first reducing gas, the second reducing gas, and the blast gas were heated before being blown into the blast furnace, the carbon dioxide decrease effect under stable operation was even better than that of Example 1.

On the other hand, for Comparative Examples 1 and 2, the carbon dioxide decrease effect under stable operation was insufficient.

• Examples 2

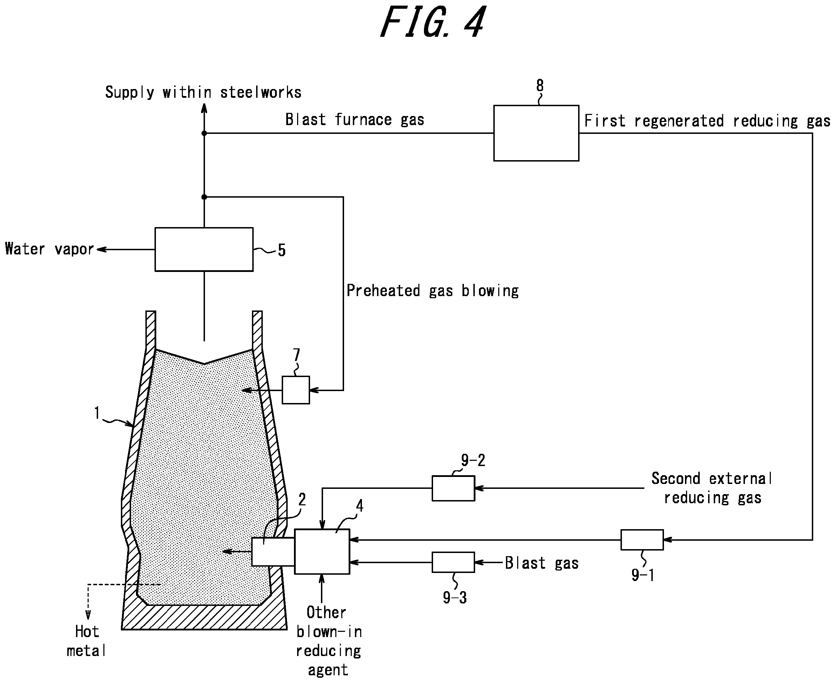

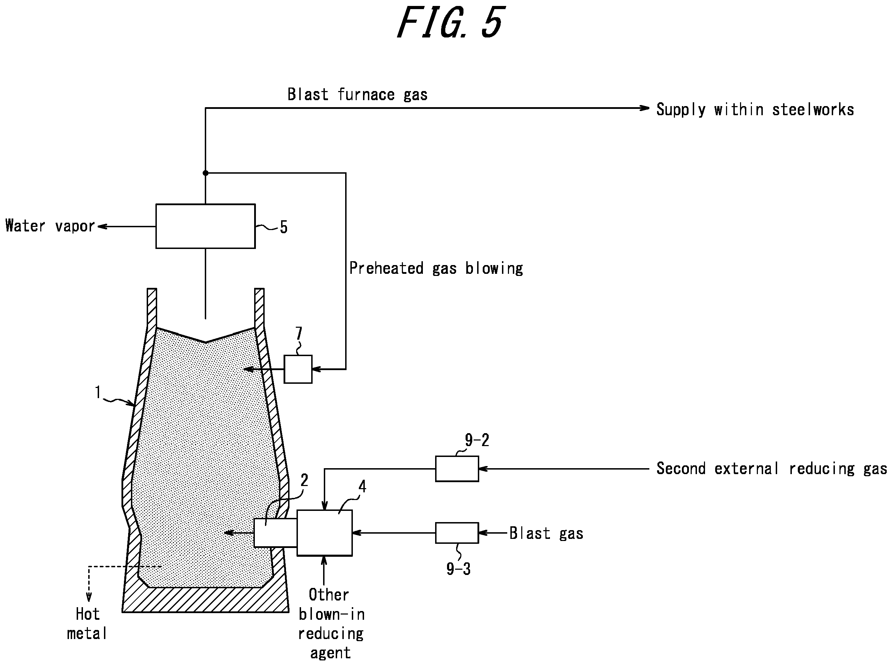

Numerical analysis simulating blast furnace operation under the conditions listed in Table 2 was carried out using a thermal-mass balance analysis of a blast furnace that reproduces the blast furnace and the blast furnace ancillary apparatus schematically illustrated in FIG. 4 (Examples 5 to 7 according to the present disclosure) or FIG. 5 (Reference Example 2), and the carbon dioxide emissions from the blast furnace were evaluated. For comparative purposes, the blast furnace specifications were standardized as much as possible, and the heat loss was set to 150,000 kcal/t. The first reducing gas was entirely the first regenerated reducing gas. The second reducing gas was entirely the second external reducing gas. The heating by each heating device was electric heating.

The carbon dioxide decrease effect under stable operation was then evaluated based on the following criteria. The evaluation results are listed in Table 2.

Pass: the hot metal temperature was 1500 °C to 1550 °C, the tuyere-outlet temperature was 1900 °C to 2500 °C (preferably 2000 °C to 2400 °C), and the amount of carbon dioxide emitted was less than the amount specified for Reference Example 2 (where only the second reducing gas is used as the blown-in reducing agent).

Fail: at least one of the following conditions was not met: the hot metal temperature was 1500 °C to 1550 °C, the tuyere-outlet temperature was 1900 °C to 2500 °C, or the amount of carbon dioxide emitted was less than the amount specified for Reference Example 2.

Table 2

| | | | Reference Example 2 | Example 5 | Example 6 | Example 7 |
|---|---|---|---|---|---|---|
| Shaft efficiency | | - | 0.85 | 0.85 | 0.85 | 0.82 |
| Reducing agent other than first reducing gas and second reducing gas | Coke rate | kg/t | 381 | 377 | 314 | 372 |
| | Pulverized coal rate | kg/t | 0 | 0 | 0 | 0 |
| First reducing gas | Blowing amount | $Nm^3/t$ | 0 | 200 | 200 | 200 |
| | CO concentration | vol% | - | 57 | 54 | 36 |
| | $CO+H_2$ concentration | vol% | - | 100 | 100 | 100 |
| | Heating carried out | - | - | yes | yes | yes |
| | Temperature | °C | - | 900 | 900 | 900 |
| Second reducing gas | Type | - | methane | methane | propane | hydrogen |
| | Blowing amount | $Nm^3/t$ | 213 | 139 | 78 | 495 |
| | Hydrocarbon concentration or $H_2$ concentration | vol% | 100 | 100 | 100 | 100 |
| | Heating carried out | - | no | no | no | yes |
| | Temperature | °C | 25 | 25 | 25 | 900 |

(continued)

| | | | Reference Example 2 | Example 5 | Example 6 | Example 7 |
|---|---|---|---|---|---|---|
| Blast gas | Oxygen concentration | vol% | 100 | 100 | 100 | 100 |
| | Blowing amount | $Nm^3/t$ | 350 | 305 | 301 | 231 |
| | Heating carried out | - | no | no | no | no |
| | Blast temperature | °C | 25 | 25 | 25 | 25 |
| Input C | | kg/t | 447 | 404 | 399 | 324 |
| $CO_2$ emission | | kg/t | 1638 | 1480 | 1464 | 1190 |
| Hot metal temperature | | °C | 1524 | 1524 | 1524 | 1524 |
| Tuyere-outlet temperature | | °C | 2069 | 2156 | 2060 | 2238 |
| Evaluation results | | - | - | pass | pass | pass |

As indicated in Table 2, all of the Examples 5 to 7 demonstrated an excellnt carbon dioxide decrease effect under stable operation.

•Examples 3

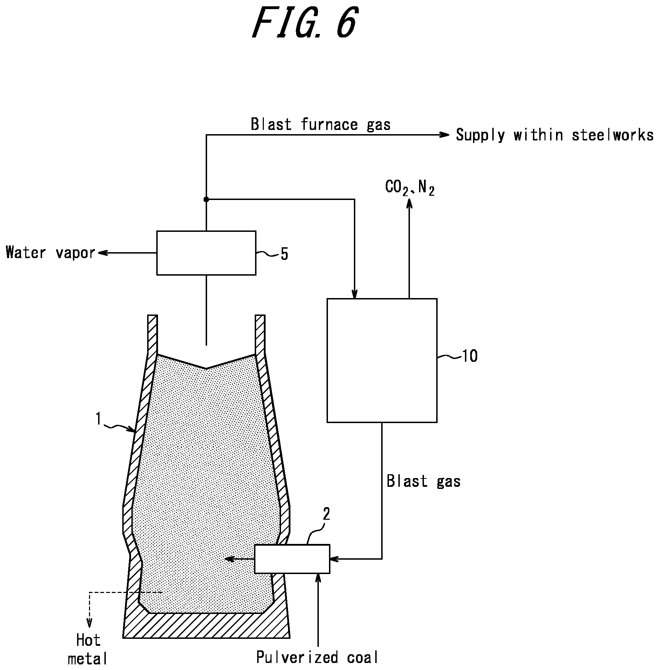

Numerical analysis simulating blast furnace operation under the conditions listed in Table 3 was carried out using a thermal-mass balance analysis of a blast furnace that reproduces the blast furnace and the blast furnace ancillary apparatus schematically illustrated in FIG. 1 (Example 8), FIG. 3 (Reference Example 3), or FIG. 6 (Comparative Example 3), and the carbon dioxide emissions from the blast furnace were evaluated. In FIG. 6, reference sign 10 denotes a hot air oven. For comparative purposes, the blast furnace specifications were standardized as much as possible, and the heat loss was set to 150,000 kcal/t. The first reducing gas was entirely the first regenerated reducing gas. The second reducing gas was entirely the second regenerated reducing gas. The heating by the first heating device was electric heating. A hot air oven was used to heat the blast gas.

The carbon dioxide decrease effect under stable operation was then evaluated based on the following criteria. The evaluation results are listed in Table 3.

Pass: the hot metal temperature was 1500 °C to 1550 °C, the tuyere-outlet temperature was 1900 °C to 2500 °C (preferably 2000 °C to 2400 °C), and the amount of carbon dioxide emitted was less than the amount specified for Reference Example 3 (where only the second reducing gas is used as the blown-in reducing agent).

Fail: at least one of the following conditions was not met: the hot metal temperature was 1500 °C to 1550 °C, the tuyere-outlet temperature was 1900 °C to 2500 °C, or the amount of carbon dioxide emitted was less than the amount specified for Reference Example 3.

Table 3

| | | | Reference Example 3 | Comparative Example 3 | Example 8 |
|---|---|---|---|---|---|
| Shaft efficiency | | - | 0.85 | 0.85 | 0.85 |
| Reducing agent other than first reducing gas and second reducing gas | Coke rate | kg/t | 411 | 402 | 407 |
| | Pulverized coal rate | kg/t | 0 | 149 | 0 |
| First reducing gas | Blowing amount | $Nm^3/t$ | 0 | 0 | 40 |
| | CO concentration | vol% | - | - | 34 |
| | $CO+H_2$ concentration | vol% | - | - | 51 |
| | Heating carried out | - | - | - | yes |
| | Temperature | °C | - | - | 900 |

(continued)

| | | | Reference Example 3 | Comparative Example 3 | Example 8 |
|---|---|---|---|---|---|
| Second reducing gas | Type of hydrocarbon | - | methane | - | methane |
| | Blowing amount | $Nm^3/t$ | 140 | 0 | 140 |
| | Hydrocarbon concentration | vol% | 100 | - | 100 |
| | Heating carried out | - | no | - | no |
| | Temperature | °C | 25 | - | 25 |
| Blast gas | Oxygen concentration | vol% | 35 | 23 | 35 |
| | Blowing amount | $Nm^3/t$ | 831 | 1460 | 827 |
| | Heating carried out | - | yes | yes | yes |
| | Blast temperature | °C | 1178 | 1178 | 1178 |
| Input C | | kg/t | 359 | 470 | 355 |
| $CO_2$ emission | | kg/t | 1317 | 1722 | 1302 |
| Hot metal temperature | | °C | 1524 | 1524 | 1524 |
| Tuyere-outlet temperature | | °C | 2128 | 2042 | 2085 |
| Evaluation results | | - | - | fail | pass |

As indicated in Table 3, Example 8 demonstrated an excellent carbon dioxide decrease effect under stable operation.

On the other hand, for Comparative Example 3, the carbon dioxide decrease effect under stable operation was insufficient.

•Examples 4

Using Example 1 of Examples 1 as the base conditions, numercical analysis simulating blast furnace operation was carried out under the conditions listed in Table 4, bt setting the blowing amounts of the first reducing gas and the second reducing gas in the blowing process according to indicators of blast furnace operating conditions, and the carbon dioxide emissions from the blast furnace were evaluated. Here, numerical analysis was carried out to simulate operational fluctuations caused by changes in the properties of the ore material.

Here, hot metal temperature and tuyere-outlet temperature were used as indicators of blast furnace operating conditions, and the blowing amounts of the first reducing gas and the second reducing gas were controlled so that both the hot metal temperature and tuyere-outlet temperature were within the reference temperature ranges listed in Table 4. For example, when the reduction reaction was slowed due to fluctuation in the properties of the ore material, causing the hot metal temperature to fall below the reference temperature range, the blowing amount of the first reducing gas was decreased while the blowing amount of the second reducing gas was increased to secure operational stability. When the reduction reaction was excessively accelerated due to fluctuation in the properties of the ore material, causing the hot metal temperature to exceed the reference temperature range, the blowing amount of the first reducing gas was increased, while the blowing amount of the second reducing gas was decreased to further decrease $CO_2$ emissions. When the tuyere-outlet temperature fell below the reference temperature range, the blowing amounts of both the first reducing gas and the second reducing gas were decreased. When the tuyere-outlet temperature exceeded the reference temperature range, the blowing amounts of both the first reducing gas and the second reducing gas were increased. In combination, the blowing amounts of the first reducing gas and the second reducing gas were controlled so that both the hot metal temperature and the tuyere-outlet temperature fell within the reference temperature ranges listed in Table 4.

The carbon dioxide decrease effect under stable operation was then evaluated based on the following criteria. The evaluation results are listed in Table 4.

Pass: carbon dioxide emissions were less than those of Reference Example 1.

Fail: carbon dioxide emissions were the same as, or greater than, those of Reference Example 1.

[Table 4]

Table 4

| | | Example 9 |
|---|---|---|
| Indicators of blast furnace operation conditions | - | hot metal temperature + tuyere-outlet temperature |
| Reference temperature range of hot metal temperature | °C | 1500 to 1550 |
| Reference temperature range of tuyere-outlet temperature | °C | 2000 to 2400 |
| Adjustment range of first reducing gas blowing amount | $Nm^3/t$ | 180 to 220 |
| Adjustment range of second reducing gas blowing amount | $Nm^3/t$ | 112 to 161 |
| $CO_2$ emission | kg/t | 1204 |
| Evaluation results | - | pass |

As indicated in Table 4, Example 9 demonstrated an excellent carbon dioxide decrease effect under stable operation, even when operational fluctuations occurred. When operational fluctuations occurred, when the blowing amounts of the first reducing gas and the second reducing gas in the blowing process were not set based on indicators of the blast furnace operating conditions (that is, the blowing amounts of the first reducing gas and the second reducing gas were kept constant), it was not possible to resolve the conditions under which the hot metal temperature fell below the reference temperature range, resulting in unstable operation.

• Examples 5

Using Example 1 of Examples 1 as the base conditions, numerical analysis simulating blast furnace operation was carried out under the conditions listed in Table 5, by setting the blowing amounts of the first reducing gas and the second reducing gas in the blowing process according to the available amount of hydrogen gas, and the carbon dioxide emissions from the blast furnace were evaluated. Here, fluctuations in the available amount of hydrogen were simulated, and constraints were imposed to ensure that the amount of hydrogen gas used in the second regenerated reducing gas generation did not exceed the available hydrogen supply. When the available hydrogen supply decreased and became equal to or less than the amount of hydrogen gas used in the generation of the second regenerated reducing gas, the blowing amount of the second reducing gas was decreased. Further, as in Example 4, the hot metal temperature and the tuyere-outlet temperature were used as indicators of the blast furnace operating conditions, and the blowing amounts of the first reducing gas and the second reducing gas were controlled so that both the hot metal temperature and the tuyere-outlet temperature were in the reference temperature ranges listed in Table 5.

The carbon dioxide decrease effect under stable operation was then evaluated based on the following criteria. The evaluation results are indicated in Table 5.

Pass: carbon dioxide emissions were less than those of Reference Example 1.
Fail: carbon dioxide emissions were the same as, or greater than, those of Reference Example 1.

[Table 5]

Table 5

| | | Example 10 |
|---|---|---|
| Indicators of blast furnace operation conditions | - | hot metal temperature + tuyere-outlet temperature |
| Reference temperature range of hot metal temperature | °C | 1500 to 1550 |

(continued)

| | | Example 10 |
|---|---|---|
| Reference temperature range of tuyere-outlet temperature | °C | 2000 to 2400 |
| Fluctuation range in available hydrogen amount | $Nm^3/t$ | 450 to 600 |
| Adjustment range of first reducing gas blowing amount | $Nm^3/t$ | 200 to 220 |
| Adjustment range of second reducing gas blowing amount | $Nm^3/t$ | 112 to 139 |
| $CO_2$ emission | kg/t | 1196 |
| Evaluation results | - | pass |

As indicated in Table 5, Example 10 demonstrated excellent carbon dioxide decrease effect under stable operation.

REFERENCE SIGNS LIST

1 blast furnace
2 tuyere
3 second reducing gas generation device
4 gas blowing device
4-1 central pipe
4-2 inner pipe
4-3 outer pipe
5 first dewatering device
6 second dewatering device
7 burner
8 first reducing gas generation device
9-1 first heating device
9-2 second heating device
9-3 third heating device
10 hot air oven
11 raceway

**Claims**

**1.** A method of operating a blast furnace, the method comprising:

a first heating process of heating a first reducing gas; and
a blowing process of blowing a blast gas and a blown-in reducing agent into the blast furnace from a tuyere of the blast furnace,
wherein the blown-in reducing agent contains the first reducing gas and a second reducing gas,
and wherein the first reducing gas contains carbon monoxide and the second reducing gas contains at least one of a hydrocarbon or hydrogen.

**2.** The method of operating a blast furnace according to claim 1, wherein a blowing amount of the first reducing gas and a blowing amount of the second reducing gas in the blowing process are set according to indicators of blast furnace operating conditions.

**3.** The method of operating a blast furnace according to claim 2, wherein the indicators of the blast furnace operating conditions are a hot metal temperature and a tuyere-outlet temperature.

**4.** The method of operating a blast furnace according to any one of claims 1 to 3, wherein the concentration of carbon

monoxide in the first reducing gas is 30 vol% or more, and the total concentration of the hydrocarbon and hydrogen in the second reducing gas is more than 70 vol%.

**5.** The method of operating a blast furnace according to any one of claims 1 to 4, further comprising a second heating process of heating the second reducing gas.

**6.** The method of operating a blast furnace according to any one of claims 1 to 5, wherein the second reducing gas contains methane as the hydrocarbon.

**7.** The method of operating a blast furnace according to any one of claims 1 to 6, wherein the oxygen concentration of the blast gas is 80 vol% or more.

**8.** The method of operating a blast furnace according to any one of claims 1 to 7, wherein a feed gas of at least one of the first reducing gas or the second reducing gas is steelworks by-product gas.

**9.** The method of operating a blast furnace according to claim 8, wherein carbon dioxide is separated from the steelworks by-product gas to obtain a carbon dioxide-containing gas and remaining gas,
and wherein the remaining gas is used as a feed gas of the first reducing gas, and the carbon dioxide-containing gas is used as a feed gas of the second reducing gas.

**10.** The method of operating a blast furnace according to claim 8 or 9, wherein a surplus of at least one of the first reducing gas or the second reducing gas is supplied to a steelworks.

**11.** The method of operating a blast furnace according to any one of claims 1 to 10, wherein at least a portion of the second reducing gas is generated from steelworks by-product gas and hydrogen gas, and a blowing amount of the second reducing gas in the blowing process is set according to an available amount of the hydrogen gas.

**12.** A blast furnace ancillary apparatus comprising:

a first reducing gas generation device configured to generate a first reducing gas;
a second reducing gas generation device configured to generate a second reducing gas;
a first heating device configured to heat the first reducing gas; and
a gas blowing device comprising a reducing gas supply section configured to introduce the first reducing gas and the second reducing gas into a tuyere of a blast furnace, and a blast gas supply section configured to introduce a blast gas into the tuyere of the blast furnace,
wherein
the first reducing gas contains carbon monoxide and the second reducing gas contains at least one of a hydrocarbon or hydrogen.

FIG. 1
Supply within steelworks
Blast furnace gas
8
First regenerated reducing gas
By-product remaining gas
Preheated gas blowing
Waste heat
Hydrogen gas
Water vapor
5
3
Second regenerated reducing gas
6
Water vapor
7
1
9-2
Surplus
Supply within steelworks
Second external reducing gas
2
Blast gas
4
9-3
9-1
First external reducing gas
Hot metal
Other blown-in reducing agent

FIG. 2A
11
2
4-2
4-1
4-3
4-3
4
Blast gas
First reducing gas
Second reducing gas
First reducing gas
Blast gas

FIG. 2B

11
2
4-2
4-1
4-3
4-3
4
Blast gas
Blast gas
Mixed gas of first reducing gas and second reducing gas
Other blown-in reducing agent
Mixed gas of first reducing gas and second reducing gas

Blast furnace gas
Supply within steelworks
Hydrogen gas
Second regenerated reducing gas
Water vapor
Supply within steelworks
Blast gas
Preheated gas blowing
Other blown-in reducing agent
Water vapor
Hot metal
1
2
3
4
5
6
7
9-2
9-3


FIG. 3

Supply within steelworks
8
Blast furnace gas
First regenerated reducing gas
Water vapor
5
Preheated gas blowing
7
1
9-2
Second external reducing gas
2
4
Blast gas
9-1
9-3
Hot metal
Other blown-in reducing agent

FIG. 4

FIG. 5
Blast furnace gas
Supply within steelworks
Water vapor
5
Preheated gas blowing
7
1
9-2
Second external reducing gas
2
4
Blast gas
9-3
Hot metal
Other blown-in reducing agent

FIG. 6

Blast furnace gas
Supply within steelworks
$CO_2$、$N_2$
Water vapor
5
10
1
Blast gas
2
Hot metal
Pulverized coal

## INTERNATIONAL SEARCH REPORT

International application No. **PCT/JP2025/003468**

**A. CLASSIFICATION OF SUBJECT MATTER**

***C21B 5/00***(2006.01)i; *C21B 7/16*(2006.01)n
FI: C21B5/00 321; C21B7/16 305

According to International Patent Classification (IPC) or to both national classification and IPC

**B. FIELDS SEARCHED**

Minimum documentation searched (classification system followed by classification symbols)

C21B5/00-7/24

Documentation searched other than minimum documentation to the extent that such documents are included in the fields searched

Published examined utility model applications of Japan 1922-1996
Published unexamined utility model applications of Japan 1971-2025
Registered utility model specifications of Japan 1996-2025
Published registered utility model applications of Japan 1994-2025

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2014-28984 A (JFE STEEL CORPORATION) 13 February 2014 (2014-02-13) paragraphs [0014]-[0028], fig. 1 | 1, 4-6, 8-9, 12<br>2-3 |
| X<br>Y | WO 2021/131866 A1 (JFE STEEL CORPORATION) 01 July 2021 (2021-07-01) paragraphs [0024]-[0049], fig. 1-2, 6 | 1, 4-8, 10-12<br>2-3, 9 |
| Y | JP 2014-5510 A (JFE STEEL CORPORATION) 16 January 2014 (2014-01-16) paragraphs [0013]-[0020], fig. 2 | 2-3, 9 |
| Y | JP 2014-77151 A (JFE STEEL CORPORATION) 01 May 2014 (2014-05-01) paragraphs [0018], [0027]-[0028] | 3 |
| Y | WO 2021/215059 A1 (JFE STEEL CORPORATION) 28 October 2021 (2021-10-28) paragraph [0025], fig. 1 | 9 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **15 April 2025** | **28 April 2025** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2025/003468**

| Patent document cited in search report | Publication date (day/month/year) | Patent family member(s) | Publication date (day/month/year) |
|---|---|---|---|
| JP 2014-28984 A | 13 February 2014 | (Family: none) | |
| WO 2021/131866 A1 | 01 July 2021 | US 2023/0034442 A1<br>paragraphs [0065]-[0124], fig. 1-2, 6 | |
| JP 2014-5510 A | 16 January 2014 | (Family: none) | |
| JP 2014-77151 A | 01 May 2014 | (Family: none) | |
| WO 2021/215059 A1 | 28 October 2021 | EP 4141130 A1<br>paragraph [0037], fig. 1 | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2021106578 A1
- DE 102017006067 A1